# EUROPÄISCHE PATENTSCHRIFT

(11) **EP 0 639 302 B1**
(45) Veröffentlichungstag und Bekanntmachung des Hinweises auf die Patenterteilung: **03.06.1998**
(21) Anmeldenummer: 94908973.4
(22) Anmeldetag: 04.03.1994
(51) Int. Cl.: H02K 5/24, F04D 29/66, F04D 25/06

(54) **VORRICHTUNG ZUM AUFNEHMEN EINES ELEKTROMOTORS**
ELECTROMOTOR ACCOMODATING DEVICE
DISPOSITIF LOGEANT UN MOTEUR ELECTRIQUE

(30) Priorität: 04.03.1993 DE 9303162 U; 07.10.1993 DE 4334124
(43) Veröffentlichungstag der Anmeldung: 22.02.1995
(73) Patentinhaber: ROBERT BOSCH GMBH, 70442 Stuttgart (DE)
(72) Erfinder: VOLLMER, Thomas, D-77815 Bühl (DE); HANEK, Michael, D-77871 Renchen (DE); GROSS, Gerhard, D-77886 Lauf (DE); SCHNEIDER, Ralf-Michael, D-76534 Baden-Baden (DE); VAN WIJHE, Albert, D-77830 Bühlertal (DE); FRANK, Wolfgang, D-77815 Bühl (DE)
(86) Internationale Anmeldenummer: DE9400271
(87) Internationale Veröffentlichungsnummer: WO9421025

(56) Entgegenhaltungen:
- WO-A-83/04287
- DE-A- 4 121 927
- US-A- 1 678 438
- US-A- 4 807 718

## Beschreibung

### Stand der Technik

Die Erfindung geht aus von einem Elektromotor mit einer Aufnahmevorrichtung nach der Gattung des Hauptanspruchs, wobei die Aufnahmevorrichtung direkt und fest mit einem Tragteil verbunden ist.

Aus der US 1,678,438 ist bereits die Abstützung eines Elektromotors an einer Aufnahmevorrichtung mit zwei mit Abstand in Richtung der Motorlängsachse angeordneten Trägern bekannt. In einem ersten Ausführungsbeispiel sind elastische Dämpfelemente zwischen den zu einem Motorgehäuses gehörenden Außenseiten von Lagerungen der Motorankerwelle und einer Aufnahmevorrichtung angeordnet, über die der Motor radial abgestützt ist. Zwei zwischen dem Motorgehäuse und einem Ständer der Aufnahmevorrichtung angeordnete Spiralfedern sichern den Motor gegen Verdrehung relativ zur Aufnahmevorrichtung. Der Motor ist jedoch nicht in axialer Richtung gegen die Aufnahmevorrichtung abgestützt. In einem zweiten Ausführungsbeispiel sind die Träger im Innern eines Gehäuses des Motors angeordnet und ragen durch eine Gehäuseöffnung nach außen. Die beiden Träger weisen Aufnehmungen auf, an denen im Innern des Motorgehäuses angeordnete Lagerungen der Motorankerwelle über Dämpfelemente abgestützt sind. Diese Anordnung ist aufwendig und der Motor ist nur unter erschwerten Bedingungen zu montieren.

### Vorteile der Erfindung

Der erfindungsgemäße Elektromotor mit den Merkmalen des Hauptanspruchs hat den Vorteil, daß der Motor samt Aufnahmevorrichtung gegen axiale Verschiebung abgestützt ist, während gleichzeitig eine leichte Austauschbarkeit des Motors gewahrt bleibt.

Durch die in den Unteransprüchen aufgeführten Maßnahmen sind vorteilhafte Weiterbildungen und Verbesserungen des im Hauptanspruch angegebenen Elektromotors möglich.

### Zeichnung

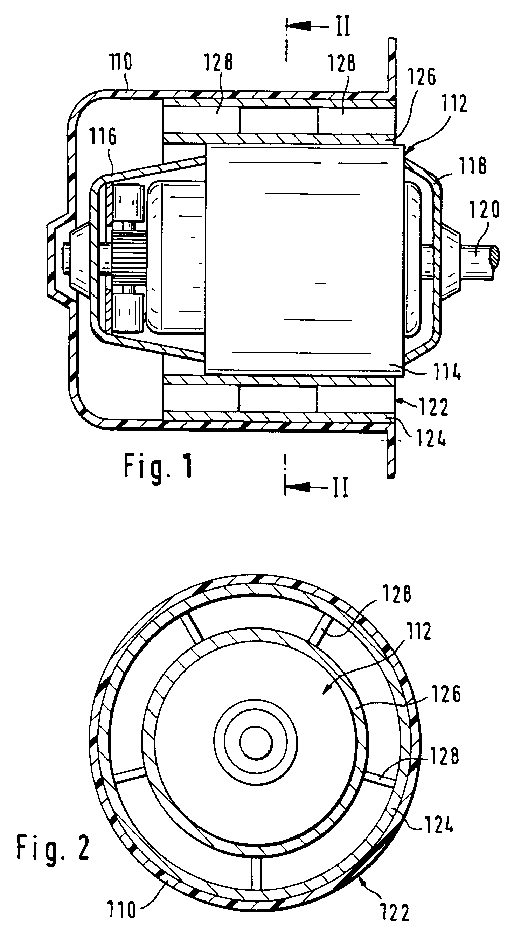

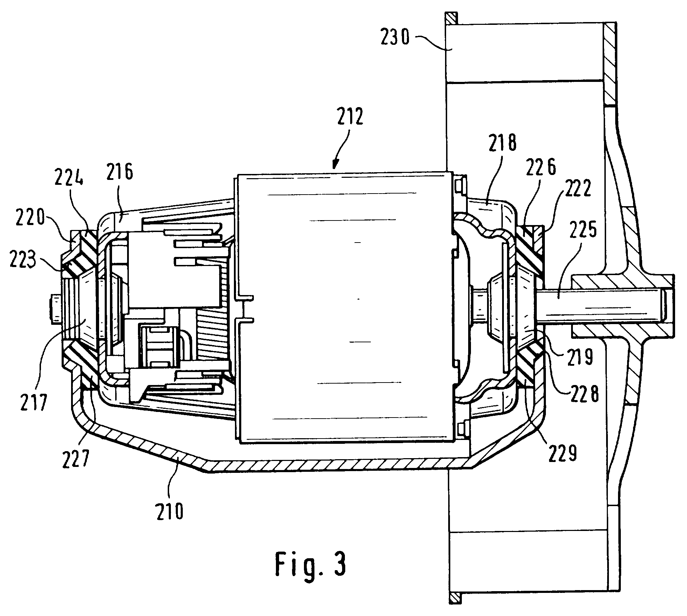

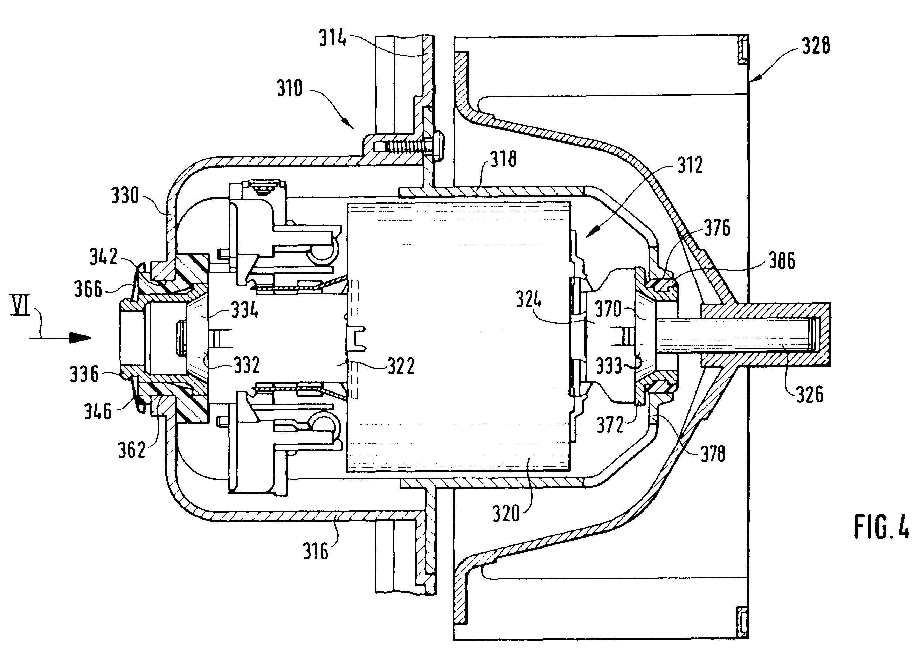

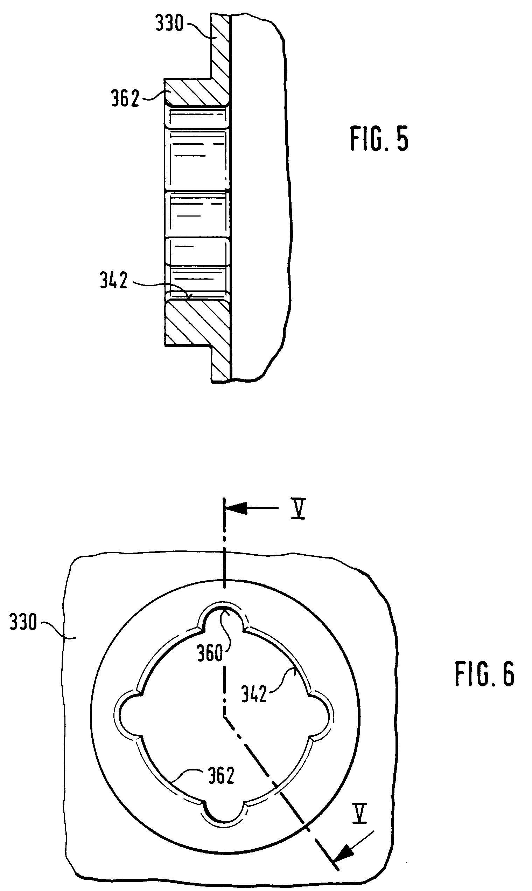

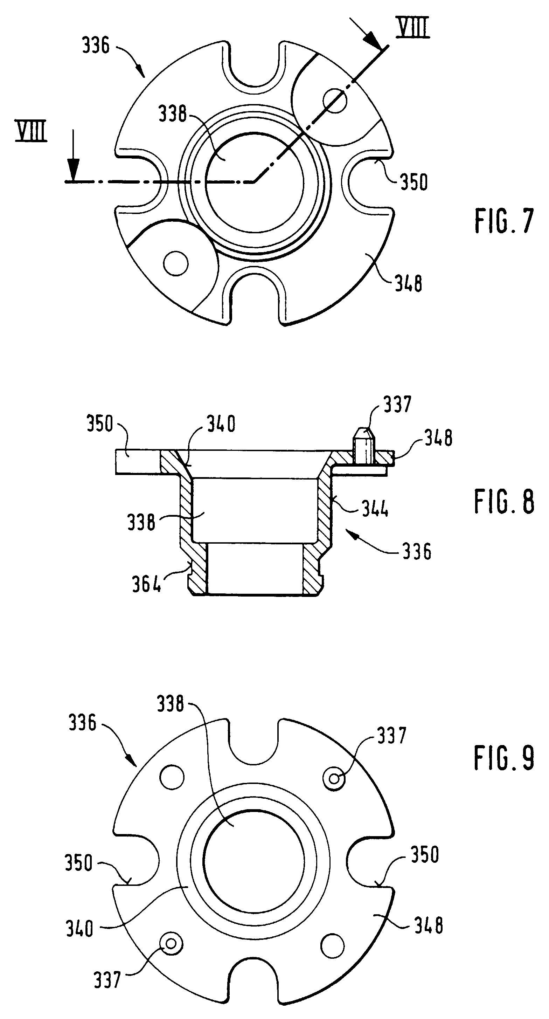

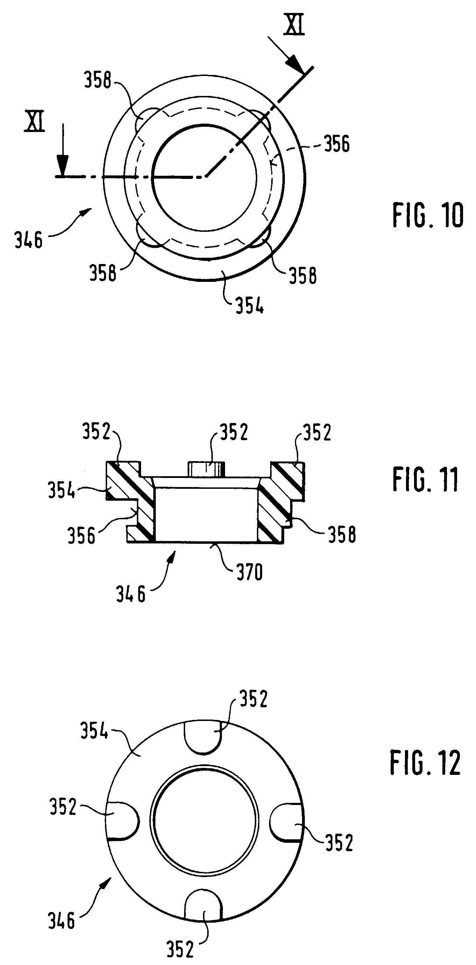

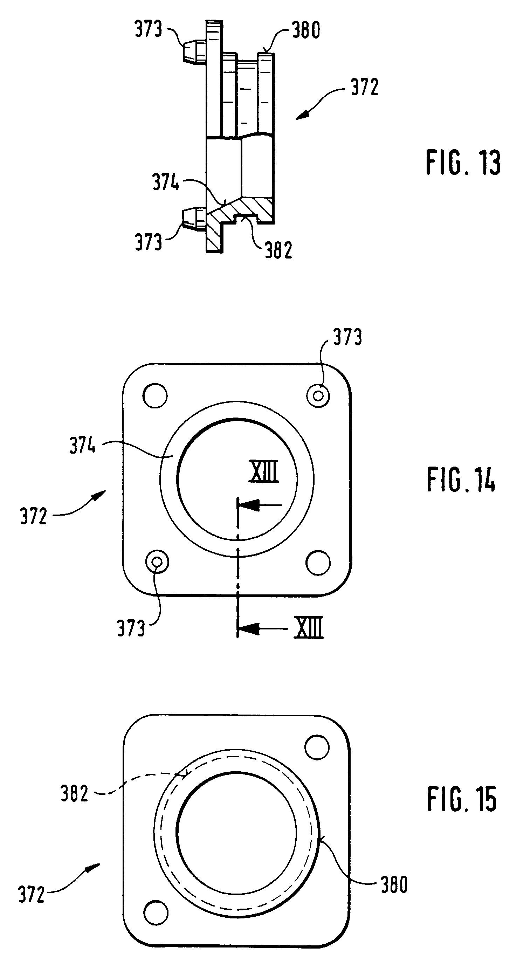

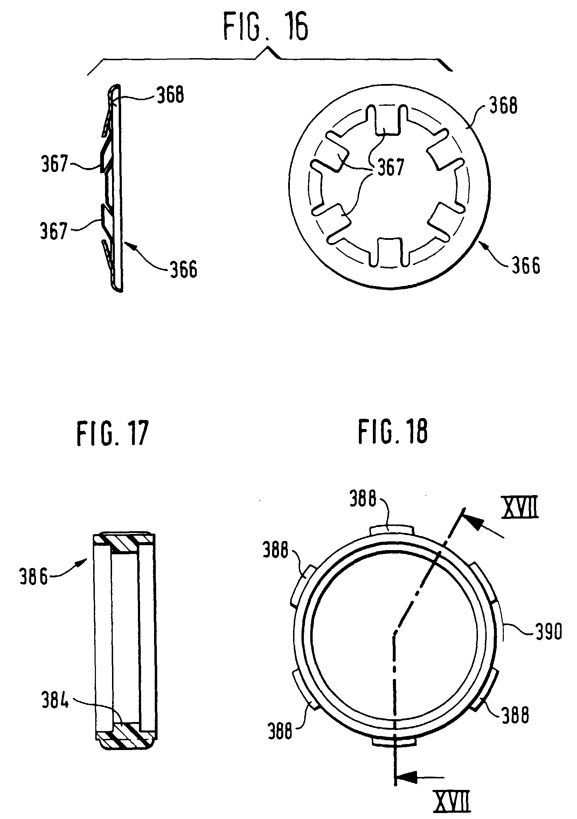

Ausführungsbeispiele der Erfindung sind in den Figuren 3 bis 18 dargestellt und in der nachfolgenden Beschreibung näher erläutert. Es zeigen Figur 1 einen Längsschnitt durch einen Aufnahmetopf, in welchem ein Elektromotor angeordnet ist, Figur 2 eine Seitenansicht des Elektromotors gemäß Figur 1, der von einem im Schnitt dargestellten, rohrförmigen Dämpfelement umgeben ist, Figur 3 einen Längsschnitt durch eine andere Aufnahmevorrichtung für einen Lüftermotor, Figur 4 einen Längsschnitt durch eine weitere Ausführungsform einer Aufnahmevorrichtung für einen Lüftermotor, Figur 5 einen Schnitt entlang der Linie V-V in Figur 6, Figur 6 eine Teilansicht in Richtung des Pfeiles VI, auf einen zur Aufnahmevorrichtung gemäß Figur 4 gehörenden Haltetopf, vergrößert dargestellt, Figur 7 eine Draufsicht auf eine im Haltetopf gemäß Figur 4 sitzende Zentrierhülse, vergrößert dargestellt, Figur 8 einen Schnitt durch die Zentrierhülse entlang der Linie VIII-VIII, Figur 9 eine Ansicht von unten auf die Zentrierhülse, Figur 10 eine Draufsicht auf eine in Figur 4 dargestellte Dämpfbuchse, vergrößert dargestellt, Figur 11 einen Schnitt durch die Dämpfbuchse, entlang der Linie XI-XI, Figur 12 eine Ansicht von unten auf die Dämpfbuchse, Figur 13 einen Teilschnitt entlang der Linie XIII-XIII durch einen in einer zur Aufnahmevorrichtung gemäß Figur 4 gehörenden Stütznapf sitzenden Zentrierring, in vergrößerter Darstellung, Figur 14 eine Ansicht von unten auf den Zentrierring, Figur 15 eine Draufsicht auf den Zentrierring, Figur 16 eine Draufsicht und eine Seitenansicht einer in Figur 4 dargestellten Sicherungsscheibe, in vergrößerter Darstellung, Figur 17 einen Schnitt durch einen Dämpfring, entlang der Linie XVII-XVII in Figur 18 und Figur 18 eine Draufsicht auf einen in Figur 4 gezeigten Dämpfring in vergrößerter Darstellung.

### Beschreibung der Ausführungsbeispiele

In einer in Figur 1 im Längsschnitt dargestellten, topfförmigen Aufnahme 110 ist ein Elektromotor 112 untergebracht. Der Elektromotor 112 weist einen rohrförmigen, den Motoranker umgebenden Gehäuseabschnitt 114 auf, an dessen beiden Stirnseiten zum Motorgehäuse gehörende Träger 116 und 118 angeordnet sind. Die Träger 116 und 118 dienen zur Aufnahme von Lagerungen für die Welle 120 des Elektromotors 112. Der Durchmesser des Aufnahmetopfes 110 ist größer als der Durchmesser des rohrförmigen Gehäuseabschnitts 114. Zwischen den einander zugewandten Wänden - also der Innenwand des Topfes 110 und der äußeren Mantelfläche des rohrförmigen Gehäuseabschnitts 114 - ist ein Dämpfelement 122 angeordnet, das aus einem elastischen Material hergestellt ist. Das Dämpfelement 122 ist rohrartig ausgebildet. Wie Figur 2 zeigt, umgibt es den rohrförmigen Gehäuseabschnitt 114 des Elektromotors 112 passend. Es ist als Doppelrohr ausgebildet, so-daß das Außenrohr 124 an der Innenwand des Topfes 110 anliegt und das Innenrohr 126 den rohrförmigen Gehäuseabschnitt 114 des Elektromotors 112 umgibt. Wie insbesondere Figur 2 zeigt, liegen diese beiden Rohrteile 124 und 126 des Dämpfelements 122 mit Abstand voneinander. Sie sind durch mehrere stegartige Verbindungsstücke 128 miteinander verbunden. Die Verbindungsstege 128 erstrecken sich, wie Figur 1 zeigt, von den Stirnseiten des Dämpfelements 122 etwa parallel zur Rohrachse des Dämpfelements 122. In Richtung dieser Rohrachse gesehen sind die Stege 128 kürzer als die halbe Länge des doppelten Rohres 122. Um eine besonders gute Dämpfwirkung zu erreichen, bestehen sowohl das Außenrohr 124 als auch das Innenrohr 126 aus einem härteren Material als die Verbindungsstege 128. Durch diese Maßnahme und durch die in Längsrichtung der Rohrachse mit Abstand voneinander vorgesehene Anordnung der Dämpfstege 128 wird die Dämpfwirkung weiter gesteigert.

Bei der Ausführungsform der Erfindung gemäß Figur 3 ist die Aufnahmevorrichtung 210 trogartig ausgebildet. In Längsrichtung der Motordrehachse gesehen weist die Aufnahmevorrichtung 210 zwei zu den als Lagerträger dienenden Lagerschilden 216 und 218 parallele Wände 220 und 222 auf. Da die Motoraufnahme 210 in Richtung der Motordrehachse gesehen länger ist als der Elektromotor 212, ergeben sich zwischen den Trägern 216, 218 und den ihnen zugeordneten Wänden 220 und 222 der Aufnahmevorrichtung 210 Abstände, in denen Dämpfelemente 224 und 226 untergebracht sind. Wie Figur 3 weiter zeigt, umgeben die Dämpfelemente 224, 226 kegelförmige Ausbauchungen 217, 219 der Träger 216, 218, welche ihrerseits zur Aufnahme von Lagerelementen für die Motorwelle 225 dienen. Über diese kegelförmigen Ausbauchungen 217, 219 werden die entsprechend ausgebildeten Dämpfelemente 224, 226 ordnungsgemäß zentriert. Mit ihrer Außenseite sitzen die Dämpfelemente 224, 226 in kegelförmigen Ausnehmungen 223, 228 der Aufnahmevorrichtung 210. Bei einer solchen Anordnung der Dämpfelemente ergibt sich der Vorteil, daß sie weit auseinander in der Nähe der Lagerstellen des Elektromotors liegen, was sich besonders günstig auf eine Entkopplung der Torsionsschwingungen bei sehr tiefen Frequenzen bemerkbar macht, ohne daß dadurch die Taumelneigung des Elektromotors 212 in der Aufnahmevorrichtung 210 erhöht wird. Die Dämpfelemente 224 und 226 weisen neben dem schon erwähnten kegeligen Abschnitt einen sich radial nach außen erstreckenden Ringflansch 227 bzw. 229 auf, der an der Kegelbasis mit dem kegeligen Abschnitt verbunden ist. Aus Figur 3 ist weiter ersichtlich, daß es sich bei dem Elektromotor 212 um einen sogenannten Gebläsemotor handelt, auf dessen Motorwelle 225 ein Gebläserad 230 sitzt.

Zwischen den Innenwänden der Aufnahmevorrichtung und den diesen zugewandten Außenwänden des Motorgehäuses sind elastische Dämpfelemente angeordnet, die sich an den einander zugewandten Wänden der Aufnahmevorrichtung des Motorgehäuses abstützen, welche in Richtung der Motor - Drehachse gesehen, mit Abstand voneinander angeordnet sind. Auf diese Weise wird eine zufriedenstellende Dämpfung der Schwingungen und damit des unerwünschten Betriebsgeräuschs des Gebläses erreicht. Durch die Aufnahme des Gebläsemotors in der Nähe der Lagerstellen seiner Ankerwelle kann durch den so erreichten, maximalen Abstand der Aufnahmepunkte die Adaption des Gebläsemotors tangential sehr weich ausgeführt werden.

Eine weitere in Figur 4 dargestellte Vorrichtung 310 zum Aufnehmen eines Elektromotors 312 weist eine Wand 314 auf, die Teil einer nicht dargestellten Wand eines Luftführungskanals ist, welcher zur Klimaanlage eines Kraftfahrzeuges gehört. Zur Aufnahmevorrichtung gehören ein Haltetopf 316 und ein Stütznapf 318, die beide mit der Wand 314 fest verbunden sind. Der Elektromotor 312 hat ein Rückschlußrohr 320, das zum Motorgehäuse gehört. An den beiden stirnseitigen Enden des Rückschlußrohres 320 sind jeweils ein Lagerbügel 322 und 324 angeordnet, wobei der Lagerbügel 322 sich auf der Kommutatorseite des Elektromotors 312 befindet. Der andere Lagerbügel 324 ist von einer Verlängerung 326 der Motorankerwelle durchdrungen und ragt somit in den Luftführungskanal. Die Verlängerung 326 trägt ein Lüfterrad 328, welches bei aktiviertem Elektromotor 312 für Luftdurchsatz im Luftführungskanal dient. Der Haltetopf 316 erstreckt sich von der Wand 314 aus über den Lagerbügel 322 derart, daß der Boden 330 des Haltetopfs 316 sich mit Abstand vom freien Ende des Lagerbügels 322 befindet. An der Endfläche 332 des Lagerbügels 322 ist eine im Querschnitt kegelstumpfförmige Ausstülpung 334 vorgesehen, deren äußere Mantelfläche zur Halterung des Elektromotors 312 benutzt wird. Dazu ist an der Endfläche 332 des Lagerbügels 322 eine Hülse 336 befestigt, die aber ihrem Wesen nach zum Topfboden 330 gehört. Die Hülse weist an ihrer Zentralbohrung 338 eine kegelförmige Vertiefung 340 auf, welche an den Verlauf der Ausstülpung 334 so angepaßt ist, daß die Vertiefung eine Halterung für den Elektromotor 312 bildet. Die Hülse 336 erstreckt sich von der Endfläche 332 des Elektromotors 312 aus durch eine Ausnehmung 342 des Topfbodens 330 hindurch. Sie weist an ihrer äußeren Mantelfläche einen Zylinderabschnitt 344 auf, auf den eine aus einem elastischen Material bestehende Dämpfbuchse 346 aufgebracht ist. Die Figuren 7 bis 12 veranschaulichen die konstruktiven Details der Hülse 336 und der Dämpfbuchse 346. Die Hülse 336 ist an ihrem einen Ende mit einem Ringflansch 348 versehen, dessen stirnseitige Endfläche in montiertem Zustand an der Endfläche 332 des Elektromotors anliegt und mit diesem verbunden ist. Er ist beim Ausführungsbeispiel mit vier randoffenen Aussparungen 350 versehen, in welche axiale Vorsprünge 352 greifen, die an einer an der Dämpfbuchse 346 angeordneten Ringwand 354 angeordnet sind. Weiter weist die Dämpfbuchse 346 an ihrem Außenmantel eine Ringnut 356 auf. Vom Nutgrund der Ringnut 356 aus erstrecken sich beim Ausführungsbeispiel vier nockenartige Vorsprünge 358. Wie Figur 4 zeigt, sitzt die Dämpfbuchse 346 in der Ausnehmung 342 des Topfbodens 330. Dazu weist die Ausnehmung 342 den nockenförmigen Vorsprüngen 358 der Dämpfbuchse 346 zugeordnete Auskehlungen 360 auf, so daß eine verdrehsichere Halterung der Dämpfbuchse 346 im Boden 330 gewährleistet ist, wenn der Ringrand 362 der Ausnehmung 342 in der Ringnut 356 der Dämpfbuchse 346 sitzt. Neben der Verdrehsicherung für die Dämpfbuchse 346 sorgen nockenartige Vorsprünge 358 auch für eine Dämpfung von während des Betriebs des Elektromotors auftretenden Drehschwingungen, die im besonderen Maße auch durch die axialen Vorsprünge 352 der Dämpfbuchse 346 minimiert werden, welche in die randoffenen Aussparungen 350 der Hülse 336 greifen. Weiter zeigt Figur 4, daß die Hülse 336 mit ihrem flanschfernen Ende aus der Dämpfbuchse 346 ragt. Dort befindet sich eine an der äußeren Mantelfläche der Hülse 336 angeordnete Ringkerbe 364 zur Aufnahme einer Sicherungsscheibe 366, die in Figur 16 dargestellt ist. Die Sicherungsscheibe 366 stützt sich mit elastischen Lappen 367 vorgespannt in der Ringkerbe 364 ab und liegt somit mit ihrer Ringfläche 368 an der Stirnfläche 370 der Dämpfbuchse 346 an. Auf diese Weise ist der Elektromotor 312 in axialer Richtung mit dem Haltetopf 316 verbunden. Der Aufbau, die Ausgestaltung und die Anordnung von Haltetopf, Dämpfbuchse, Hülse und Sicherungsscheibe 366 sorgen für eine ordnungsgemäße Lagerung und Sicherung des Motors sowohl in axialer als auch in radialer Richtung. Darüber hinaus werden besonders die unerwünschten, weil geräuschintensiven Tangentialschwingungen gedämpft. An der Hülse 336 angeordnete Zapfen 337 dienen der Positionierung der Hülse an der Endfläche des Lagerbügels 322.

Neben der eben beschriebenen Halterung des Elektromotors ist dieser noch an seinem lüfterradseitigen Ende im Stütznapf 318 abgestützt. Dazu weist der Elektromotor 312 an der stirnseitigen Endfläche 333 des Lagerbügels 324 eine kegelstumpfförmige Ausbauchung 370 auf, der ein Ring 372 zugeordnet ist, welcher die Ausbauchung 370 in einer entsprechend kegelig ausgebildeten Aufnahmebohrung 374 (Figur 13) des Rings 372 aufnimmt. Der Ring 372 ist ebenfalls fest mit der Endfläche 333 des Lagerbügels 324 verbunden; er gehört seinem Wesen nach aber zum Napfboden 378. Der Ring 372 sitzt in einer Durchbrechung 376 des Napfbodens 378. Die Durchbrechung des Napfbodens weist einen kreisförmigen Rand auf. Sie ist im Durchmesser größer als der Außendurchmesser des Rings 372, der die an der Außendurchmesser-Mantelfläche 380 eine Ringnut 382 aufweist, in welche ein Ringvorsprung 384 eines Dämpfrings 386 greift, wenn der Dämpfring 386 auf den Ring 372 aufgebracht ist. Am Umfang des Dämpfrings sind beim Ausführungsbeispiel sechs Stützvorsprünge 388 angeordnet, welche bei eingebautem und mit dem Dämpfring 386 versehenen Ring 372 an der inneren Mantelfläche der Durchbrechung 376 anliegen. Dazu ist ein gedachter Umkreis 390, der die freien Enden der Stützvorsprünge 388 berührt, so auf die Durchbrechung 376 abgestimmt, daß die Stützvorsprünge 388 nur ganz leicht zusammengedrückt werden. Am Ring 372 angeordnete Zapfen 373 dienen der Positionierung des Rings an der Endfläche 333 des Lagerbügels 324.

## Patentansprüche

1. Elektromotor mit einem Gehäuse (212, 216, 218), das an den Stirnseiten Träger (216, 218) zur Lagerung einer Motorankerwelle aufweist, und einer Aufnahmevorrichtung (210), an der die Träger (216, 218) im Bereich der Lagerung und/oder die Lagerungen der Motorankerwelle mit einer Außenseite des Gehäuses über wenigstens ein Dämpfelement (224, 226) radial abgestützt sind, dadurch gekennzeichnet, daß wenigstens einer der Träger (216, 218) und/oder eine der Lagerungen über das mindestens eine Dämpfelement (224, 226) auch axial abgestützt ist.

2. Elektromotor nach Anspruch 1, dadurch gekennzeichnet, daß die Aufnahmevorrichtung (210) zu wenigstens einer Außenwand des Trägers (216, 218) und/oder Lagerung des Elektromotors parallele Wände (220, 222) aufweist.

3. Elektromotor nach Anspruch 2, dadurch gekennzeichnet, daß sich wenigstens eine der Wände (220, 222) der Aufnahmevorrichtung (210) radial nach außen erstreckt.

4. Elektromotor nach einem der vorhergehenden Ansprüche, dadurch gekennzeichnet, daß wenigstens einer der Träger (216, 218) und/oder der Lagerungen eine kegelförmige Ausbauchung (217, 219) aufweist, der eine kegelförmige Ausnehmung in dem vorzugsweise ringförmigen Dämpfelement (224, 226) zugeordnet ist.

5. Elektromotor nach Anspruch 4, dadurch gekennzeichnet, daß der kegelförmigen Ausbauchung (217, 219) eine kegelförmige Ausnehmung (223, 228) in der dem Träger (216, 218) zugehörigen Wand (220, 222) zugeordnet ist und daß das ringförmige Dämpfelement (224, 226) zwischen den einander gegenüberliegenden Kegelwänden von Träger und Wand angeordnet ist.

6. Elektromotor nach Anspruch 5, dadurch gekennzeichnet, daß das Dämpfelement (224, 226) einen sich von der Kegelbasis aus radial nach außen erstreckenden Ringflansch (227 bzw. 229) hat.

7. Elektromotor nach einem der Ansprüche 1 bis 6, dadurch gekennzeichnet, daß der in der Aufnahmevorrichtung (210) angeordnete Elektromotor ein Gebläsemotor ist, auf dessen Motorwelle (225) ein Lüfterrad (230) sitzt.

8. Elektromotor nach einem der Ansprüche 1 bis 7, dadurch gekennzeichnet, daß die Träger des Elektromotors (312) durch am Rückschlußrohr (320) befestigte Lagerbügel (322, 324) gebildet sind, daß die Aufnahmevorrichtung (310) einen mit einer Wand eines Luftführungskanals fest verbundenen Haltetopf (316) aufweist, dessen Topfboden (330) die eine Wand der Aufnahmevorrichtung (310) bildet und daß mit der Wand des Luftführungskanals ein Stütznapf (318) fest verbunden ist, dessen Napfboden (378) die andere Wand der Aufnahmevorrichtung (310) bildet.

9. Elektromotor nach Anspruch 8, dadurch gekennzeichnet, daß der Elektromotor (312) an dem einen der beiden Böden (330, 378) sowohl in Richtung der Drehachse des Motorankers, als auch radial zu dieser Drehachse und an dem anderen der beiden Böden (378, 330) lediglich in radialer Richtung abgestützt ist.

10. Elektromotor nach einem der Ansprüche 8 oder 9, wobei der Elektromotor mit einer Verlängerung der Ankerwelle den einen Lagerbügel durchdringt und in einem Luftführungskanal einer Kraftfahrzeug-Klimaanlage ragt und diese Verlängerung ein Lüfterrad trägt, dadurch gekennzeichnet, daß der Lagerbügel (324) von dem Stütznapf (318) übergriffen und eine kegelstumpfförmige Ausbauchung (370) des Lagerbügels (324) in einer dieser angepaßten Aufnahme des Napfbodens (378) aufgenommen ist.

11. Elektromotor nach Anspruch 10, dadurch gekennzeichnet, daß die Aufnahme in einer Zentralbohrung eines Zentrierrings (372) ausgebildet ist, der in einer Durchbrechung (376) des Napfbodens (378) angeordnet ist.

12. Elektromotor nach Anspruch 11, dadurch gekennzeichnet, daß zwischen dem Zentrierring (372) und dem Rand der Durchbrechung (376) ein aus einem elastischen Material bestehender Dämpfring (386) angeordnet ist.

13. Elektromotor nach Anspruch 12, dadurch gekennzeichnet, daß an der inneren Mantelfläche des Dämpfrings (386) ein Ringvorsprung (384) angeordnet ist, der in einer an der äußeren Mantelfläche des Zentrierrings (372) angebrachte Ringnut (382) greift.

14. Elektromotor nach einem der Ansprüche 12 oder 13, dadurch gekennzeichnet, daß an der äußeren Mantelfläche des Dämpfrings (386) mehrere, in Umfangsrichtung mit Abstand voneinander angeordnete Stützvorsprünge (388) angeordnet sind, deren Umkreis (390) auf den Durchmesser der kreisförmigen Durchbrechung (376) abgestimmt ist.

15. Elektromotor nach einem der Ansprüche 8 oder 9, dadurch gekennzeichnet, daß vorzugsweise der kommutatorseitige Lagerbügel (322) von dem Haltetopf (316) übergriffen ist und eine kegelstumpfförmige Ausstülpung (334) aufweist, die von einer dieser angepaßten Vertiefung (340) des Topfbodens (330) aufgenommen ist.

16. Elektromotor nach Anspruch 15, dadurch gekennzeichnet, daß die Vertiefung (340) in einer Zentralbohrung (338) einer Zentrierhülse (336) ausgebildet ist, die in einer im Topfboden (330) angeordneten Ausnehmung (342) angeordnet ist.

17. Elektromotor nach Anspruch 16, dadurch gekennzeichnet, daß zwischen der Zentrierhülse (336) und dem Rand (362) der Ausnehmung (342) eine aus einem elastischen Material bestehende Dämpfbuchse (346) angeordnet ist.

18. Elektromotor nach Anspruch 17, dadurch gekennzeichnet daß die Dämpfbuchse (346) an ihrer äußeren Mantelfläche mit einer Ringnut (356) versehen ist, in welche der Ringrand (362) der Topfbodenausnehmung (342) greift.

19. Elektromotor nach Anspruch 18, dadurch gekennzeichnet, daß in der Ringnut (356) wenigstens ein nockenartiger Vorsprung (358) angeordnet ist, dem eine entsprechende Auskehlung (360) des Ringrandes (362) zugeordnet ist.

20. Elektromotor nach einem der Ansprüche 17 bis 19, dadurch gekennzeichnet, daß die Zentrierhülse (336) einen im Topfinneren angeordneten Ringflansch (348) aufweist, dem eine entsprechende Ringwand (354) der Dämpfbuchse (346) gegenüberliegt und daß die Ringwand (354) mit axialen Vorsprüngen (352) in diesen zugeordnete Aussparungen (350) des Ringflansches (348) greift.

21. Elektromotor nach einem der Ansprüche 16 bis 20, dadurch gekennzeichnet, daß die Zentrierhülse (336) mit ihrem fingflanschfernen Ende aus der Dämpfbuchse (346) ragt und daß dieses Ende mit einer Ringkerbe (364) versehen ist, die zur Aufnahme eines elastischen Sicherungsscheibe (366) dient.

22. Elektromotor nach einem der Ansprüche 11 bis 14, dadurch gekennzeichnet, daß der Zentrierring (372) an dem einen Lagerbügel (324) befestigt ist.

23. Elektromotor nach einem der Ansprüche 16 bis 21, dadurch gekennzeichnet, daß die Zentrierhülse (336) an dem anderen Lagerbügel (322) befestigt ist.

## Claims

1. Electric motor with housing (212, 216, 218) which has, on the end faces, carriers (216, 218) for the mounting of a motor armature shaft, and with a receiving device (210), on which the carriers (216, 218), in the region of the mounting, and/or the mountings of the motor armature shaft are supported radially relative to an outer face of the housing via at least one damping element (224, 226), characterized in that at least one of the carriers (216, 218) and/or one of the mountings is also supported axially via the at least one damping element (224, 226).

2. Electric motor according to Claim 1, characterized in that the receiving device (210) has walls (220, 222) parallel to at least one outer wall of the carrier (216, 218) and/or mounting of the electric motor.

3. Electric motor according to Claim 2, characterized in that at least one of the walls (220, 222) of the receiving device (210) extends radially outwards.

4. Electric motor according to one of the preceding claims, characterized in that at least one of the carriers (216, 218) and/or of the mountings has a conical protuberance (217, 219) which is assigned a conical recess in the preferably annular damping element (224, 226).

5. Electric motor according to Claim 4, characterized in that the conical protuberance (217, 219) is assigned a conical recess (223, 228) in the wall (220, 222) associated with the carrier (216, 218), and in that the annular damping element (224, 226) is arranged between the mutually opposite cone walls of the carrier and wall.

6. Electric motor according to Claim 5, characterized in that the damping element (224, 226) has an annular flange (227 or 229) extending radially outwards from the cone base.

7. Electric motor according to one of Claims 1 to 6, characterized in that the electric motor arranged in the receiving device (210) is a blower motor, on the motor shaft (225) of which is seated a fan wheel (230).

8. Electric motor according to one of Claims 1 to 7, characterized in that the carriers of the electric motor (312) are formed by bearing yokes (322, 324) fastened to the short-circuit tube (320), in that the receiving device (310) has a holding can (316) which is fixedly connected to one wall of an air guide duct and the can bottom (330) of which forms one wall of the receiving device (310), and in that the wall of the air guide duct has fixedly connected to it a supporting cup (318), the cup bottom (378) of which forms the other wall of the receiving device (310).

9. Electric motor according to Claim 8, characterized in that the electric motor (312) is supported, on one of the two bottoms (330, 378), both in the direction of the axis of rotation of the motor armature and radially relative to this axis of rotation and, on the other of the two bottoms (378, 330), only in the radial direction.

10. Electric motor according to one of Claims 8 or 9, the electric motor passing with an extension of the armature shaft through one bearing yoke and projecting in an air guide duct of a motor vehicle air-conditioning system, and this extension carrying a fan wheel, characterized in that the supporting cup (318) engages over the bearing yoke (324) and a frustoconical protuberance (370) of the bearing yoke (324) is received in a receptacle of the cup bottom (378), the said receptacle being adapted to the said protuberance.

11. Electric motor according to Claim 10, characterized in that the receptacle is designed in a central bore of a centring ring (372) which is arranged in a perforation (376) of the cup bottom (378).

12. Electric motor according to Claim 11, characterized in that a damping ring (386) consisting of an elastic material is arranged between the centring ring (372) and the edge of the perforation (376).

13. Electric motor according to Claim 12, characterized in that the inner cylindrical surface of the damping ring (386) has arranged on it an annular projection (384) which engages in an annular groove (382) made on the outer cylindrical surface of the centring ring (372).

14. Electric motor according to one of Claims 12 or 13, characterized in that the outer cylindrical surface of the damping ring (386) has arranged on it a plurality of supporting projections (388) which are arranged at a distance from one another in the circumferential direction and the circumscribed circle (390) of which is matched to the diameter of the circular perforation (376).

15. Electric motor according to one of Claims 8 or 9, characterized in that, preferably, the holding can (316) engages over the commutator-side bearing yoke (322) which has a frustoconical protuberance (334) which is received by a depression (340) of the can bottom (330), the said depression being adapted to the said protuberance.

16. Electric motor according to Claim 15, characterized in that the depression (340) is designed in a central bore (338) of a centring sleeve (336) which is arranged in a recess (342) arranged in the can bottom (330).

17. Electric motor according to Claim 16, characterized in that a damping bush (346) consisting of an elastic material is arranged between the centring sleeve (336) and the edge (362) of the recess (342).

18. Electric motor according to Claim 17, characterized in that the damping bush (346) is provided, on its outer cylindrical surface, with an annular groove (356), into which the annular edge (362) of the canbottom recess (342) engages.

19. Electric motor according to Claim 12, characterized in that the annular groove (356) has arranged in it at least one cam-like projection (358) which is assigned a corresponding fluting (360) of the annular edge (362).

20. Electric motor according to one of Claims 17 to 19, characterized in that the centring sleeve (336) has an annular flange (348) which is arranged in the can interior and opposite which is located a corresponding annular wall (354) of the damping bush (346), and in that the annular wall (354) engages with axial projections (352) into clearances (350) of the annular flange (348), the said clearances being assigned to the said projections.

21. Electric motor according to one of Claims 16 to 20, characterized in that the centring sleeve (336) projects with its end remote from the annular flange out of the damping bush (346), and in that this end is provided with an annular notch (364) which serves for receiving an elastic retaining washer (366).

22. Electric motor according to one of Claims 11 to 14, characterized in that the centring ring (372) is fastened to one bearing yoke (324).

23. Electric motor according to one of Claims 16 to 21, characterized in that the centring sleeve (336) is fastened to the other bearing yoke (322).

## Revendications

1. Moteur électrique avec un carter (212, 216, 218), qui comporte sur les faces frontales des supports (216, 218) pour le positionnement d'un arbre de l'induit du moteur, et un dispositif de logement (210), sur lequel les supports (216, 218) dans la zone du positionnement et/ou des logements des paliers de l'arbre d'induit du moteur sont supportés radialement par une face extérieure du carter par l'intermédiaire d'au moins un élément amortisseur (224, 226),
caractérisé en ce qu'
au moins un des supports (216, 218) et/ou un des logements de palier est supporté axialement aussi par l'intermédiaire d'au moins un élément d'amortissement (224, 226).

2. Moteur électrique selon la revendication 1,
caractérisé en ce que
le dispositif de logement (210) comporte au moins par rapport à une paroi extérieure des supports (216, 218) et/ou à un logement de palier du moteur électrique, des parois parallèles (220, 222).

3. Moteur électrique selon la revendication 2,
caractérisé en ce qu'
au moins une des parois (220, 222) du dispositif de logement (210) s'étend radialement vers l'extérieur.

4. Moteur électrique selon une des revendications précédentes,
caractérisé en ce qu'
au moins un des supports (216, 218) et/ou un des logements de palier présente un évasement en forme de cône (217, 219), auquel est associé dans l'élément amortisseur (224, 226) de préférence de forme annulaire, un évidement conique.

5. Moteur électrique selon la revendication 4,
caractérisé en ce qu'
• à l'évasement en forme de cône (217, 219), est associé, dans la paroi (220, 222) faisant partie des supports (216, 218), un évidement de forme conique (223, 228),
• l'élément amortisseur annulaire (224, 226) est disposé entre les parois coniques opposées l'une à l'autre des supports et de la paroi.

6. Moteur électrique selon la revendication 5,
caractérisé en ce que
l'élément amortisseur (224, 226) a une collerette annulaire (227 ou 229) s'étendant de la base du cône radialement vers l'extérieur.

7. Moteur électrique selon une des revendications 1 à 6,
caractérisé en ce que
le moteur électrique est un moteur de ventilateur disposé dans le dispositif de logement (210), sur l'arbre duquel (225) est montée une roue de ventilateur (230).

8. Moteur électrique selon une des revendications 1 à 7,
caractérisé en ce que
• les supports du moteur électrique (312) sont constitués par des étriers de butée (322, 324) fixés à la fermeture tubulaire arrière (320),
• le dispositif de logement (310) comporte un pot d'appui (316) lié rigidement à une paroi d'un canal de guidage d'air, dont le fond du pot (330) forme l'une des parois du dispositif de logement (310), et
• une coupelle d'appui (318) est reliée de manière fixe à la paroi du canal de guidage d'air, dont le fond de coupelle (378) constitue l'autre paroi du dispositif de logement (310).

9. Moteur électrique selon la revendication 8,
caractérisé en ce que
le moteur électrique (312) s'appuie dans le sens radial, sur l'un des deux fonds (330, 378) aussi bien dans le sens de l'axe de rotation de l'induit du moteur, que radialement par rapport à cet axe de rotation et sur l'autre des deux fonds (378, 330) simplement en direction radiale.

10. Moteur électrique selon une des revendications 8 ou 9, dans lequel le moteur électrique traverse avec un prolongement de l'arbre de l'induit l'un des étriers de butée et dépasse dans un canal de guidage d'air d'une installation de conditionnement d'air d'un véhicule automobile et ce prolongement porte une roue de ventilateur,
caractérisé en ce que
l'étrier de butée (324) est saisi au dessus par la coupelle d'appui (318) et un évasement (370) en forme de tronc de cône de l'étrier de butée (324) est reçu dans un logement (378) adapté à lui du fond de coupelle.

11. Moteur électrique selon la revendication 10,
caractérisé en ce que
le logement est réalisé dans un perçage central d'un anneau de centrage (372), qui est disposé dans une ouverture (376) du fond de coupelle (378).

12. Moteur électrique selon la revendication 11,
caractérisé en ce qu'
entre l'anneau de centrage (372) et le bord du passage (376), il existe un anneau amortisseur (386) composé d'un matériau élastique.

13. Moteur électrique selon la revendication 12,
caractérisé en ce que
sur la surface enveloppe intérieure de l'anneau amortisseur (386) est disposée une saillie annulaire (384), qui fait prise dans une rainure annulaire (382) appliquée à la surface enveloppe extérieur de l'anneau de centrage (372).

14. Moteur électrique selon une des revendications 12 ou 13,
caractérisé en ce que
sur la surface enveloppe extérieure de l'anneau amortisseur (386) sont placées plusieurs saillies d'appui (388) disposées dans le sens de la périphérie à une certaine distance les unes des autres, et dont le cercle circonscrit (390) est accordé à l'ouverture circulaire (376).

15. Moteur électrique selon une des revendications 8 ou 9,
caractérisé en ce que
l'étrier de butée du côté du collecteur (322) empiète de préférence sur le pot d'appui (316) et comporte une protubérance en forme de tronc de cône (334), qui est logée par un évidement (340) adapté à celle-ci du fond de pot (330).

16. Moteur électrique selon la revendication 15,
caractérisé en ce que
l'évidement (340) est réalisé dans un perçage central (338) d'un manchon de centrage (336) qui est placé dans une partie creuse (342) située dans le fond de pot (330).

17. Moteur électrique selon la revendication 16,
caractérisé en ce qu'
entre le manchon de centrage (336) et le bord (362) de la partie creuse (342) est montée une douille d'amortissement (346) composée d'un matériau élastique.

18. Moteur électrique selon la revendication 17,
caractérisé en ce que
la douille d'amortissement (346) est munie sur sa surface enveloppe extérieure d'une rainure annulaire (356), dans laquelle fait prise le bord annulaire (362) de la cavité (342) du fond du pot.

19. Moteur électrique selon la revendication 12,
caractérisé en ce que
dans la rainure annulaire (356) est placée au moins une saillie du type mentonnet (358), à laquelle est associée une gorge correspondante (360) du bord annulaire (362).

20. Moteur électrique selon une des revendications 17 à 19,
caractérisé en ce que
• le manchon de centrage (336) comporte une collerette annulaire (348) placée à l'intérieur du pot, laquelle est opposée une paroi annulaire correspondante (354) de la douille d'amortissement (346),
• la paroi annulaire (354) fait prise avec des pièces en saillie axiale (352) dans des évidements (350) associés à celles-ci de la collerette annulaire (348).

21. Moteur électrique selon une des revendications 16 à 20,
caractérisé en ce que
• le manchon de centrage (336) dépasse par son extrémité éloignée de la collerette annulaire de la douille d'amortissement,
• cette extrémité est munie d'une rainure annulaire (364), qui sert à recevoir un disque de sécurité élastique (366).

22. Moteur électrique selon une des revendications 11 à 14,
caractérisé en ce que
l'anneau de centrage (372) est fixé à l'un des étriers de butée (324).

23. Moteur électrique selon une des revendications 16 à 21,
caractérisé en ce que
le manchon de centrage (336) est fixé à l'autre étrier de butée (322).
